# EUROPEAN PATENT APPLICATION

(11) **EP 1 752 715 A1**
(43) Date of publication of application: **14.02.2007**
(21) Application number: 06003176.2
(22) Date of filing: 16.02.2006
(51) Int. Cl.: F24F 11/00

(54) **Ventilation system and method for driving the same**

(30) Priority: 12.08.2005 KR 2005074252
(71) Applicant: Samsung Electronics Co., Ltd., Suwon-si, Gyeonggi-Do (KR)
(72) Inventor: Kim, Jeong Yon, Suwon-Si, Gyeonggi-Do (KR)
(74) Representative: Grünecker, Kinkeldey, Stockmair & Schwanhäusser Anwaltssozietät

(57) **Abstract**

A ventilation system and a method for driving the same. The ventilation system includes a ventilation unit (20) for exhausting indoor air to an outdoor space and inhaling outdoor air to an indoor space; an air purification unit (10) for purifying the indoor air; an indoor sensing unit (91) for measuring a pollution level of the indoor air; an outdoor sensing unit (95) for measuring a pollution level of the outdoor air; and a controller (90) for determining whether or not the ventilation unit and the air purification unit are operated by comparing the pollution level of the indoor air to the pollution level of the outdoor air.

## Description

### CROSS-REFERENCE TO RELATED APPLICATION

This application claims the benefit of Korean Patent Application No. 2005-74252, filed August 12, 2005, in the Korean Intellectual Property Office, the disclosure of which is incorporated herein by reference.

### BACKGROUND OF THE INVENTION

### 1. Field of the Invention

The present invention relates to a ventilation system and a method for driving the same, and more particularly, to a ventilation system, in which a ventilation unit or an air purification unit is operated in consideration of a pollution level of outdoor air as well as a pollution level of indoor air, and a method for driving the same.

### 2. Description of the Related Art

Generally, when many persons work in a closed space, such as an office, as time goes by, the quality of air in the space is lowered due to the increase in the concentration of carbon dioxide. Therefore, it is necessary to frequently replace the indoor air with fresh outdoor air. For this reason, a ventilation apparatus is proposed. Conventionally, various-shaped ventilation apparatuses are used. Recently, a ventilation apparatus, which has a total heat exchanger to ventilate an indoor space without heat loss, is widely used.

The above ventilation apparatus can discharge indoor air and inhale outdoor air, but can not purify the indoor air. Accordingly, in order to purify the indoor air, a user must use an air purifier separately from the ventilation apparatus. In order to solve this problem, Korean Patent Laid-open Publication No. 2005-10366 discloses a ventilation system, which can ventilate an indoor space and purify air of the indoor space.

The above ventilation system comprises a ventilation unit, an air purification unit, a gas sensor for sensing the concentration of carbon dioxide contained in the indoor air, and a controller for controlling the ventilation unit or the air purification unit to perform a ventilation mode or an air purification mode according to the concentration of carbon dioxide sensed by the gas sensor. When the sensed concentration of carbon dioxide in the indoor air is high, the ventilation unit is driven, and when the sensed concentration of carbon dioxide in the indoor air is low, the air purification unit is driven.

Since the above conventional ventilation system having the air purification function determines whether or not the indoor space is ventilated only based on the concentration of carbon dioxide in the indoor air, outdoor air having a pollution level higher than that of the indoor air is introduced into the indoor space according to circumstances. That is, in the case that the quality of the outdoor air is lower than that of the indoor air (for example, in the case that yellow dust cloud occurs), when the concentration of the indoor air is high, the ventilation unit is driven so that the quality of the indoor air is further lowered by the ventilation.

### SUMMARY OF THE INVENTION

Therefore, one aspect of the invention is to provide a ventilation system, in which whether or not an indoor space is ventilated is determined in consideration of a pollution level of outdoor air and a pollution level of indoor air, and a method for driving the same.

In accordance with one aspect, the present invention provides a ventilation system comprising: a ventilation unit for exhausting indoor air to an outdoor space and inhaling outdoor air to an indoor space; an air purification unit for purifying the indoor air; an indoor sensing unit for measuring a pollution level of the indoor air; an outdoor sensing unit for measuring a pollution level of the outdoor air; and a controller for determining whether or not the ventilation unit and the air purification unit are operated by comparing the pollution level of the indoor air to the pollution level of the outdoor air.

The controller may control the ventilation unit so that the ventilation unit is operated when the pollution level of the indoor air is higher than the pollution level of the outdoor unit.

The controller controls the ventilation unit and the air purification unit so that the ventilation unit is not operated and the air purification unit is operated when the pollution level of the indoor air is lower than or equal to the pollution level of the outdoor unit.

Each of the indoor sensing unit and the outdoor sensing unit may comprise at least one selected from the group consisting of a dust sensor for measuring dust, a carbon dioxide sensor for measuring carbon dioxide, and a harmful substance sensor for sensing harmful substances.

In accordance with another aspect, the present invention provides a method for driving a ventilation system comprising: measuring a pollution level of indoor air and a pollution level of outdoor air; comparing the pollution level of the indoor air to the pollution level of the outdoor air; and operating a ventilation unit when the pollution level of the indoor air is higher than the pollution level of the outdoor unit, and operating an air purification unit when the pollution level of the indoor air is lower than or equal to the pollution level of the outdoor unit.

### BRIEF DESCRIPTION OF THE DRAWINGS

These and/or other aspects and advantages of the invention will become apparent and more readily appreciated from the following description of the embodiments, taken in conjunction with the accompanying drawings in which:
FIG. 1 is a sectional view of a ventilation system in accordance with an embodiment of the present invention;
FIG. 2 is a perspective view of an air purification unit of the ventilation system shown in FIG. 1;
FIG. 3 is a block diagram of the ventilation system in accordance with the embodiment of the present invention; and
FIG. 4 is a flow chart illustrating a method for driving the ventilation system shown in FIGS. 1 to 3.

### DETAILED DESCRIPTION OF THE PREFERRED EMBODIMENTS

Reference will now be made in detail to the embodiment of the present invention, an example of which is illustrated in the accompanying drawings, wherein like reference numerals refer to like elements throughout. The embodiment is described below to explain the present invention by referring to the annexed drawings.

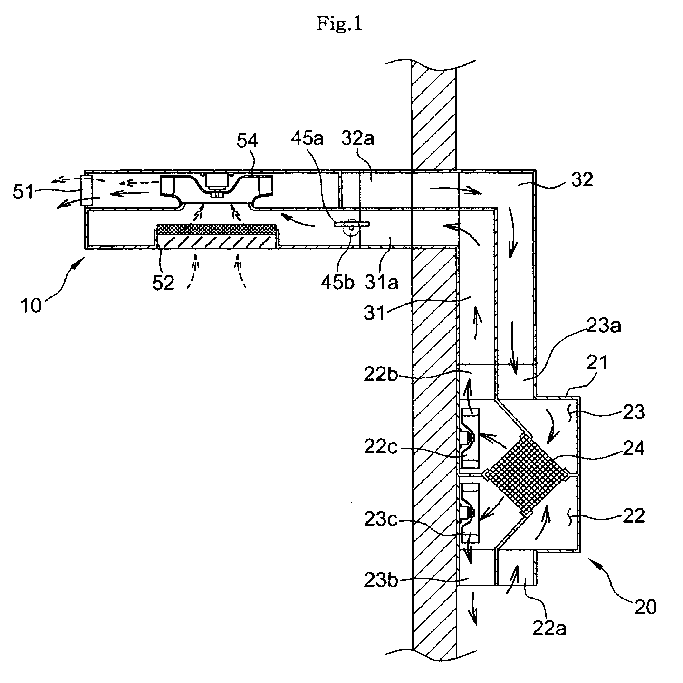

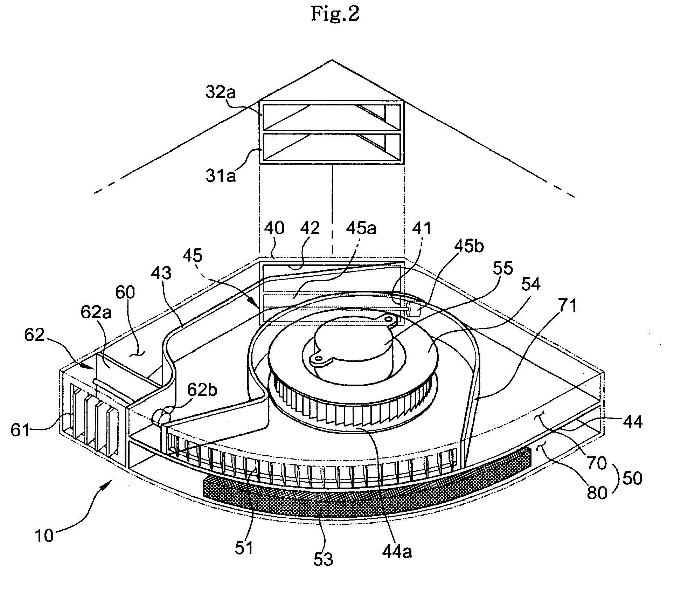

As shown in FIGS. 1 and 2, a ventilation system in accordance with an embodiment of the present invention comprises an air purification unit 10 installed in an indoor space, and a ventilation unit 20 connected to the air purification unit 10 for ventilating the indoor space.

The ventilation unit 20 comprises a main body 21 forming the external appearance thereof, an air supply channel 22 having an inlet 22a and an outlet 22b installed in the main body 21, and an air exhaust channel 23 having an inlet 23a and an outlet 23b installed in the main body 21. An air supply fan 22c and an air exhaust fan 23c are respectively installed at designated portions of the air supply channel 22 and the air exhaust channel 23. The air supply channel 22 and the air exhaust channel 23 intersect each other, and a total heat exchanger 24 for exchanging heat between air of the air supply channel 22 and air of the air exhaust channel 23 is installed at the intersection of the air supply channel 22 and the air exhaust channel 23. The total heat exchanger 24 causes outdoor air, supplied to the indoor space through the ventilation unit 20, to exchange heat with indoor air, exhausted to the outside through the ventilation unit 20, thereby reducing a temperature difference between the outdoor air and the indoor air.

The ventilation unit 20 exhausts air, which is supplied to the inside of the air supply channel 22 through the inlet 22a of the air supply channel 22, to the outside of the main body 21 through the outlet 22b of the air supply channel 22 by the driving of the air supply fan 22c, and exhausts air, which is supplied to the inside of the air exhaust channel 23 through the inlet 23a of the air exhaust channel 23, to the outside of the main body 21 through the outlet 23b of the air exhaust channel 23 by the driving of the air exhaust fan 23c. One end of an air supply duct 31 for interconnecting the air purification unit 10 and the ventilation unit 20 is connected to the outlet 22b of the air supply channel 22, and one end of an air exhaust duct 32 for interconnecting the air purification unit 10 and the ventilation unit 20 is connected to the inlet 23a of the air exhaust channel 23. Extended portions 31 a and 32a are extended from the other ends of the air supply duct 31 and the air exhaust duct 32 towards the inside of the indoor space through an inner wall.

A duct connection portion 40, to which the extended portions 31 a and 32a of the air supply and exhaust ducts 31 and 32 are connected, is formed on the rear surface of the air purification unit 10, and an outdoor air inlet port 41 connected to the air supply duct 31 and an indoor air outlet port 42 connected to the air exhaust duct 32 are formed through the duct connection portion 40.

The inside of the air purification unit 10 is divided into a right air supply chamber 50 having large dimensions communicated with the outdoor air inlet port 41, and a left air exhaust chamber 60 having small dimensions communicated with the indoor air outlet port 42, by a partition 43. An indoor air inlet port 61 for causing the indoor air to be supplied to the inside of the air exhaust chamber 60 is formed through the front surface of the air exhaust chamber 60. The air exhaust chamber 60 is formed along the inner side surface of the air purification unit 10 so that air smoothly flows through the air exhaust chamber 60.

The air supply chamber 50 is divided into an upper first air supply chamber 70 and a lower second air supply chamber 80 by a partition 44. An outlet 51 for exhausting the air in the air supply chamber 50 to the indoor space is formed through the front surface of the first air supply chamber 70, and an inlet 52 for inhaling the indoor air to the inside of the air supply chamber 50 is formed through the lower surface of the second air supply chamber 80.

A filter 53 for filtering the indoor air, supplied to the inside of the air supply chamber 50 through the inlet 52, is installed in the second air supply chamber 80 such that the filter 53 covers the inlet 52. An air blast fan 54, i.e., a centrifugal fan, for blowing the air, supplied to the inside of the air supply chamber 50 through the outdoor air inlet port 41 and the inlet 52, to the outlet 51 is installed in the first air supply chamber 70, and an air blast fan motor 55 for rotating the air blast fan 54 is fixed to the inner upper surface of the air purification unit 10. A communication hole 44a for communicating the inside of the first air supply chamber 70 and the inside of the second air supply chamber 80 is formed through the partition 44. The communication hole 44a is installed at a position corresponding to an inlet of the air blast fan 54. An air blast guide 71 for guiding the air, blown by the air blast fan 54, to the outlet 51 is installed in the first air supply chamber 70.

An air exhaust damper 62 for intermitting the flow of the air through the air exhaust chamber 60 is installed in the air exhaust chamber 60, and an air supply damper 45 for opening and closing the outdoor air inlet port 41 is installed at the outdoor air inlet port 41. The air supply damper 45 and the air exhaust damper 62 allow the air purification unit 10 to perform only an indoor air purification function or a ventilation function, and respectively comprise switching members 45a and 62a, which are rotatably installed, and an air supply damper motor 45b and an air exhaust damper motor 62b, which rotate the switching members 45a and 62a.

The outdoor air inlet port 41 located at the lower portion of the duct connection portion 40 is formed through the side surface of the second air supply chamber 80, and air, which is supplied to the inside of the second air supply chamber 80 through the outdoor air inlet port 4, passes through a space between the partition 44 and the filter 53 and is supplied to the first air supply chamber 70 through the communication hole 44a.

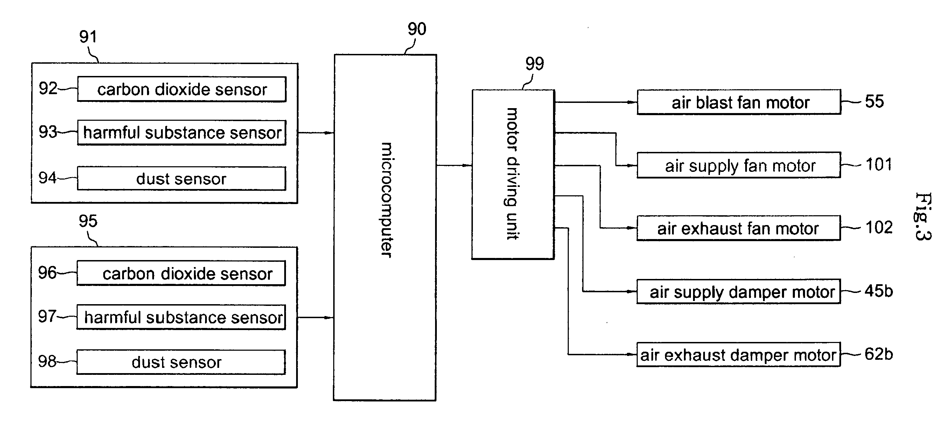

As shown in FIG. 3, in addition to the elements shown in FIGS. 1 and 2, the ventilation system in accordance with the embodiment of the present invention further comprises an indoor sensing unit 91 for sensing a pollution level of the indoor air, an outdoor sensing unit 95 for sensing a pollution level of the outdoor air, a motor driving unit 99 for driving a plurality of motors 55, 97, 98, 45b and 62b, and a controller 90 for driving the ventilation unit 20 or the air purification unit 10 according to the pollution levels of the indoor air and the outdoor air.

The in sensing unit 91 comprises a carbon dioxide sensor 92 for measuring the concentration of carbon dioxide (CO₂), a harmful substance sensor 93 for sensing harmful substances, such as formic aldehyde and VOCs, and a dust sensor 94 for sensing dust, and measures the pollution level of the indoor air. A gas sensor, which can sense carbon dioxide, is used as the carbon dioxide sensor 92, and a gas sensor, which can sense various harmful substances, is used as the harmful substance sensor 93. Otherwise, the outdoor sensing unit 91 may not separately comprise the carbon dioxide sensor 92 and the harmful substance sensor 93, and may comprise one electronic nose sensor for sensing carbon dioxide and various harmful substances. Preferably, the sensors 92, 93, and 94 of the indoor sensing unit 91 are installed around the inlet 52 so that the sensors 92, 93, and 94 can easily contact the indoor air.

Identically with the indoor sensing unit 91, the outdoor sensing unit 95 comprises a carbon dioxide sensor 96 for measuring the concentration of carbon dioxide (CO₂), a harmful substance sensor 97 for sensing harmful substances, and a dust sensor 98 for sensing dust, and measures the pollution level of the outdoor air. Preferably, the sensors 96, 97, and 98 of the outdoor sensing unit 95 are installed in the air supply channel 22 so that the sensors 96, 97, and 98 can easily contact the outdoor air.

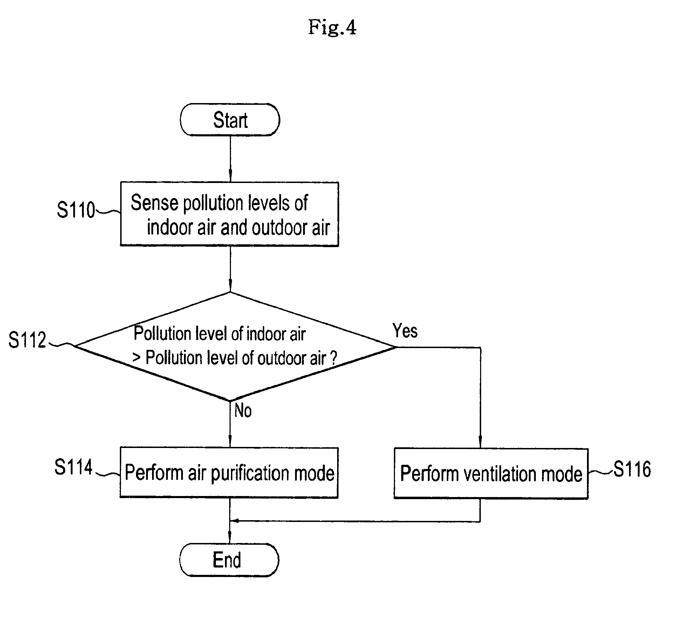

Hereinafter, with reference to FIG. 4, a method for driving the ventilation system in accordance with the embodiment of the present invention will be described. In order to detect the pollution level of the indoor air, the controller 90 controls the indoor sensing unit 91 so that the carbon dioxide sensor 92, the harmful substance sensor 93, and the dust sensor 94 respectively sense the concentrations of carbon dioxide (CO₂), harmful substances, and dust in the indoor air, and receives data output from the carbon dioxide sensor 92, the harmful substance sensor 93, and the dust sensor 94. Then, in order to detect the pollution level of the outdoor air, the controller 90 controls the outdoor sensing unit 95 so that the carbon dioxide sensor 96, the harmful substance sensor 97, and the dust sensor 98 respectively sense the concentrations of carbon dioxide (CO₂), harmful substances, and dust in the outdoor air, and receives data output from the carbon dioxide sensor 95, the harmful substance sensor 96, and the dust sensor 97 (S110).

Thereafter, the controller 90 determines whether or not the pollution level of the indoor air is higher than the pollution level of the outdoor air by comparing the pollution level of the indoor air to the pollution level of the outdoor air (S112). The determining condition of S112 is variously set according to the circumference of a space in which the ventilation system is installed. For example, when all of the concentrations of carbon dioxide (CO₂), harmful substances, and dust in the indoor air are higher than the concentrations of carbon dioxide (CO₂), harmful substances, and dust in the outdoor air, the determining condition of S112 is set to be satisfied (i.e., the pollution level of the indoor air is higher than the pollution level of the outdoor air). Otherwise, when the concentration of dust in the indoor air is lower than the concentration of dust in the outdoor air and the concentrations of carbon dioxide (CO₂) and harmful substances of the indoor air are higher than the concentrations of carbon dioxide (CO₂) and harmful substances of the outdoor air, the determining condition of S112 may be set to be satisfied.

When it is determined that the pollution level of the indoor air is higher than the pollution level of the outdoor air, the ventilation system performs a ventilation mode (S116). In the ventilation mode, the air supply damper 45 and the air exhaust damper 62 are rotated to open the air supply channel 22 and the air exhaust channel 23, and the air supply fan 22c, the air exhaust fan 23c, and the air blast fan 54 are driven. Then, the outdoor air is inhaled to the air supply channel 22 through the inlet 22a, passes through the air blast fan 54, and is discharged to the outside of the ventilation system through the outlet 51. By the driving of the air blast fan 54, the indoor air is inhaled to the ventilation system through the inlet 52, passes through the filter 53, and is discharged to the outside of the ventilation system through the outlet 51 (with reference to the arrows denoted by a solid line in FIG. 1). As described above, in the ventilation mode, the air blast fan 54 is driven together with the driving of the air supply fan 22c, thereby allowing the ventilation system to ventilate the indoor space and purify the indoor air.

On the other hand, when it is determined that the pollution level of the indoor air is lower than or equal to the pollution level of the outdoor air, the ventilation system performs an air purification mode (S114). In the air purification mode, the air supply damper 45 and the air exhaust damper 62 are rotated to close the air supply channel 22 and the air exhaust channel 23, and the air blast fan 54 is driven. Then, the indoor air is inhaled to the ventilation system through the inlet 52, passes through the filter 53 and the air blast fan 54, and is discharged to the outside of the ventilation system through the outlet 51 (with reference to the arrows denoted by a dotted line in FIG. 1). At this time, the air supply channel 22 and the air exhaust channel 23 are closed, thereby preventing the outdoor air from being supplied to the indoor space or the indoor air from being discharged to the outside due to the driving of the air blast fan 54, and allowing the ventilation system only to purify the indoor air.

Although this embodiment of the present invention describes the ventilation system, in which the purification of the indoor air is also performed in the ventilation mode in order to increase the quality of the indoor air, the air supply channel 22of the ventilation system may be changed so that air supplied from the outside to the indoor space does not pass through the air blast fan 54 and thus only the ventilation of the indoor air is performed in the ventilation mode.

As apparent from the above description, the present invention provides a ventilation system, in which a ventilation unit and an air purification unit are operated in consideration of a pollution level of outdoor air as well as a pollution level of indoor air, and a method for driving the same, thereby preventing the outdoor air having the pollution level higher than that of the indoor air from being supplied to an indoor space due to ventilation.

Although an embodiment of the invention has been shown and described, it would be appreciated by those skilled in the art that changes may be made in this embodiment without departing from the principles and spirit of the invention, the scope of which is defined in the claims and their equivalents.

## Claims

1. A ventilation system comprising:
a ventilation unit for exhausting indoor air to an outdoor space and inhaling outdoor air to an indoor space;
an air purification unit for purifying the indoor air;
an indoor sensing unit for measuring a pollution level of the indoor air;
an outdoor sensing unit for measuring a pollution level of the outdoor air; and
a controller for determining whether or not the ventilation unit and the air purification unit are operated by comparing the pollution level of the indoor air to the pollution level of the outdoor air.

2. The ventilation system as set forth in claim 1, wherein the controller controls the ventilation unit so that the ventilation unit is operated when the pollution level of the indoor air is higher than the pollution level of the outdoor unit.

3. The ventilation system as set forth in claim 1, wherein the controller controls the ventilation unit and the air purification unit so that the ventilation unit is not operated and the air purification unit is operated when the pollution level of the indoor air is lower than or equal to the pollution level of the outdoor unit.

4. The ventilation system as set forth in claim 1, wherein each of the indoor sensing unit and the outdoor sensing unit comprises at least one selected from the group consisting of a dust sensor for measuring dust, a carbon dioxide sensor for measuring carbon dioxide, and a harmful substance sensor for sensing harmful substances.

5. A method for driving a ventilation system comprising:
measuring a pollution level of indoor air and a pollution level of outdoor air;
comparing the pollution level of the indoor air to the pollution level of the outdoor air; and
operating a ventilation unit when the pollution level of the indoor air is higher than the pollution level of the outdoor unit, and operating an air purification unit when the pollution level of the indoor air is lower than or equal to the pollution level of the outdoor unit.
